# EUROPEAN PATENT APPLICATION

(11) **EP 3 518 164 A1**
(43) Date of publication of application: **31.07.2019**
(21) Application number: 17814289.9
(22) Date of filing: 20.12.2017
(51) Int. Cl.: G06Q 20/06, G06Q 20/36

(54) **CREDIT VIRTUAL MONEY GENERATION DEVICE AND CREDIT VIRTUAL MONEY MANAGEMENT DEVICE**

(30) Priority: 29.11.2017 KR 20170161354
(71) Applicant: Shinhan Card Co., Ltd., Jung-Gu Seoul 04551 (KR)
(72) Inventor: KIM, Jung Soo, Seoul 04551 (KR); CHO, Moon Il, Seoul 04551 (KR); KIM, Chy Heon, Seoul 04551 (KR); KIM, Young Hwan, Incheon 22766 (KR); KIM, Hak Bum, Gyeonggi-do 12145 (KR); CHUNG, Seung Chi, Seoul 06735 (KR)
(74) Representative: Modiano, Micaela Nadia
(86) International application number: PCT/KR2017/015097
(87) International publication number: WO 2019/107654

(57) **Abstract**

Provided is a virtual currency generation apparatus including a blockchain generator configured to generate a blockchain including a virtual currency that is generated based on a credit limit of a consumer and to update the blockchain based on payment details; an account manager configured to manage multi-signatures of a plurality of accounts sharing the blockchain; and a transaction generator configured to store a transaction condition corresponding to each of the plurality of accounts and to proceed with a payment using the virtual currency based on the transaction condition.

## Description

### TECHNICAL FIELD

The following description of one or more example embodiments relates to an apparatus for generating a credit virtual currency and an apparatus for managing a credit virtual currency. More particularly, the following description relates to a user terminal using a credit virtual currency and a card company server to issue and manage the credit virtual currency.

### RELATED ART

In a credit transaction according to the related art, a payment is performed through a payment gateway (PG) company or a value added network (VAN) company that connects a consumer, a merchant, and a card company. Accordingly, according to the conventional scheme, each of the VAN company and the PG company brokers a transaction and gains a commission according to a number of brokered transactions. Accordingly, without developing a new payment process that does not go through the VAN company and the GP company, it may be difficult to reduce commissions of credit card merchants.

Meanwhile, in the recent times, some attempts have been made to implement a transaction process without using the VAN company or the PG company and to reduce a commission, using an application (app)-to-app payment of an account transfer scheme. However, the account transfer scheme is not a credit transaction. Accordingly, using the app-to-app payment, consumers that desire to make a payment using a credit card or a credit may need to make a purchase within account balance.

Further, an automatic payment era through an object terminal as well as a person will come in the near future. However, a current credit card transaction may be performed through a person or a user terminal controlled by the person.

A *"method and storage medium using cryptocurrency for money transfer"* is disclosed in Korean Laid-Open Publication No. 10-2016-0132307. In detail, disclosed is a configuration that embodies a convenient money transfer between users by allowing each of transaction computer devices interconnected over a peer-to-peer (P2P) network to transfer a crypto currency to an electronic wallet and to exchange the corresponding crypto currency with a legal currency

### DETAILED DESCRIPTION

### SOLUTIONS

According to an aspect, there is provided a virtual currency generation apparatus including a processor. The processor includes a blockchain generator configured to generate a blockchain including a virtual currency that is generated based on a credit limit of a consumer and to update the blockchain based on payment details; an account manager configured to manage multi-signatures of a plurality of accounts sharing the blockchain; and a transaction generator configured to store a transaction condition corresponding to each of the plurality of accounts and to proceed with a payment using the virtual currency based on the transaction condition.

The account manager may be configured to manage a multi-signature of each of a primary account associated with a user terminal of the consumer and at least one of dependent account associated with the consumer.

The virtual currency generation apparatus may further include a communicator configured to receive a request for generating a first dependent account from the user terminal. The account manager may be configured to authenticate a first private key stored in the user terminal and to determine whether to generate the first dependent account based on a result of the authentication.

The account manager may be configured to generate the first dependent account in response to the first private key being authenticated and to generate a multi-signature of the first dependent account using the first private key.

The account manager may be configured to generate a plurality of second private keys derived from the first private key, to store one of the plurality of second private keys as a system key, to transmit one of the plurality of second private keys to the user terminal corresponding to the primary account, and to transmit one of the plurality of second private keys to a terminal associated with the first dependent account.

The communicator may be configured to receive an electronic signature using the first private key of the primary account and a transaction condition about the first dependent account as the request for generating the first dependent account. The transaction generator may be configured to store the transaction condition about the first dependent account in response to the first private key being authenticated, and the transaction condition includes at least one of an expiry date, a use right, and a payment right of the first dependent account.

The user terminal of the consumer may be configured to store a first private key for the primary account and to store backup keys for each of the at least one dependent account, and the backup keys may be derived from the first private key.

According to another aspect, there is provided a user terminal to generate requesting of a new dependent account. The user terminal includes a communicator configured to receive an authentication request for sharing a blockchain from a terminal; a memory configured to encrypt and store a first private key of a primary account for using the blockchain; and a processor configured to authenticate the terminal based on a preset condition and to generate a message requesting generation of a new dependent account based on a result of the authentication. The message requesting the generation of the new dependent account includes an electronic signature using the first private key of the primary account and a transaction condition about the new dependent account, and the blockchain includes a virtual currency that is generated based on a credit limit of a consumer.

The processor may be configured to determine the transaction condition including at least one of an expiry date, a use right, and a payment right of the dependent account in response to a user input.

The communicator may be configured to transmit the message requesting the generation of the new dependent account to a card company server managing the blockchain. The card company server may be configured to store the transaction condition about the new dependent account in response to the first private key being authenticated and to transmit at least two of a plurality of second private keys derived from the first private key to the user terminal.

The communicator may be configured to receive an account generation response message for the new dependent account from the card company server, and the processor may be configured to extract a plurality of second private keys for the new dependent account from the account generation response message.

The communicator may be configured to transmit one of a plurality of second private keys for the new dependent account to the terminal as a private key of the terminal, and the processor may be configured to store one of the plurality of second private keys in the memory as a backup key for the new dependent account.

The processor may be configured to generate one of an account deletion message and a payment cancellation message for the new dependent account in response to a user input. Each of the account deletion message and the payment cancellation message may include an electronic signature based on the second private key stored in the memory. The communicator may be configured to transmit one of the account deletion message and the payment cancellation message to the card company server, and the card company server may be configured to verify the electronic signature using a system key stored for the dependent account and to delete the dependent account or cancel a payment associated with the dependent account based on a result of the verification.

The memory may include a virtual currency application distributed from a card company server, and the processor may be configured to process a credit payment using a virtual currency associated with the blockchain with a consumer terminal that is connected using the virtual currency application through the communicator.

According to another aspect, there is provided a non-transitory computer-readable recording medium storing a program to generate a dependent account. The program includes an instruction set configured to encrypt and store a first private key of a primary account for using a blockchain; an instruction set configured to authenticate a terminal associated with the dependent account based on a preset condition; an instruction set configured to transmit a message requesting generation of the dependent account to a card company server managing the blockchain based on a result of the authentication; and an instruction set configured to receive an account generation response message for the dependent account from the card company server.

The program may include an instruction set configured to extract a plurality of second private keys for the dependent account from the account generation response message; and an instruction set configured to transmit one of the plurality of second private keys as a private key of a terminal associated with the dependent account.

According to another aspect, there is provided a virtual currency management apparatus including a communicator configured to receive a payment request message using a blockchain from a terminal associated with a first account among a plurality of accounts sharing the blockchain; and a processor. The processor includes a blockchain generator configured to generate the blockchain including a virtual currency that is generated based on a credit limit of a consumer and to update the blockchain based on payment details; and a transaction manager configured to verify a transaction condition corresponding to the first account and the payment request message and to manage whether to approve a transaction.

The transaction manager may be configured to determine whether to approve the transaction by comparing the transaction condition and at least one of merchant information, a payment amount, and an electronic signature included in the payment request message, and the transaction condition may include a use right of the first account, a payment right of the first account, and a backup key of the first account.

When transaction type information included in the payment request message corresponds to an installation transaction, the transaction manager may be configured to substrate an entire installation amount from a payment limit included in the transaction condition.

The transaction manager may be configured to verify whether an installation charge corresponding to the first account is deposited after a predetermined period of time is elapsed, and to restore a portion of the payment limit included in the transaction condition based on a result of the deposit.

When transaction type information included in the payment request message corresponds to an installation transaction, the transaction manager may be configured to verify whether the first account is an installation allowing account based on the transaction condition.

The transaction manager may be configured to verify an identification value associated with the first account, and to perform remittance processing or payment processing corresponding to the payment request message based on information indicated by the identification value.

### BRIEF DESCRIPTION OF THE DRAWINGS

FIG. 1 illustrates an example of a process of proceeding with a payment using a credit virtual currency according to an example embodiment.
FIG. 2 is a block diagram illustrating a virtual currency generation apparatus according to an example embodiment.
FIG. 3 illustrates an example of an operation process of a virtual currency generation apparatus according to an example embodiment.
FIG. 4 illustrates a payment process using a credit virtual currency according to an example embodiment;
FIG. 5 is a flowchart illustrating a process in which a user terminal associated with a primary account requests generation of a dependent account according to an example embodiment.
FIGS. 6A and 6B illustrate examples of a process in which a virtual currency generation apparatus generates a multi-signature account according to an example embodiment.
FIG. 7 is a block diagram illustrating a virtual currency management apparatus according to an example embodiment.

### BEST MODE

The following detailed structural or functional description of example embodiments is provided as an example only and various alterations and modifications may be made to the example embodiments. Accordingly, the example embodiments are not construed as being limited to the disclosure and should be understood to include all changes, equivalents, and replacements within the technical scope of the disclosure.

Terms, such as first, second, and the like, may be used herein to describe components. Each of these terminologies is used merely to distinguish the corresponding component from other component(s). For example, a first component may be referred to as a second component, and similarly the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, the example embodiments are described with reference to the accompanying drawings. In the respective drawings, like reference numerals refer to like elements throughout.

Initially, terms used herein are described.

In the following description, the term "blockchain" refers to a transaction book acquired by generating each piece of transaction information into a single block and by sequentially connecting the generated blocks. Encrypted virtual currencies, such as Bitcoin may be generated using a blockchain technique. "Bitcoin" is a cryptocurrency invented under the name of Satoshi Nakamoto in January 2009 and released as a source code, and is a single type of virtual currency that is used today.

The term "credit virtual currency" newly proposed in the following example embodiments may represent a virtual currency that is issued based on a credit limit of a user. A payment limit of the credit virtual currency may be restored and may be limited depending on whether a payment amount corresponding to the credit virtual currency is paid.

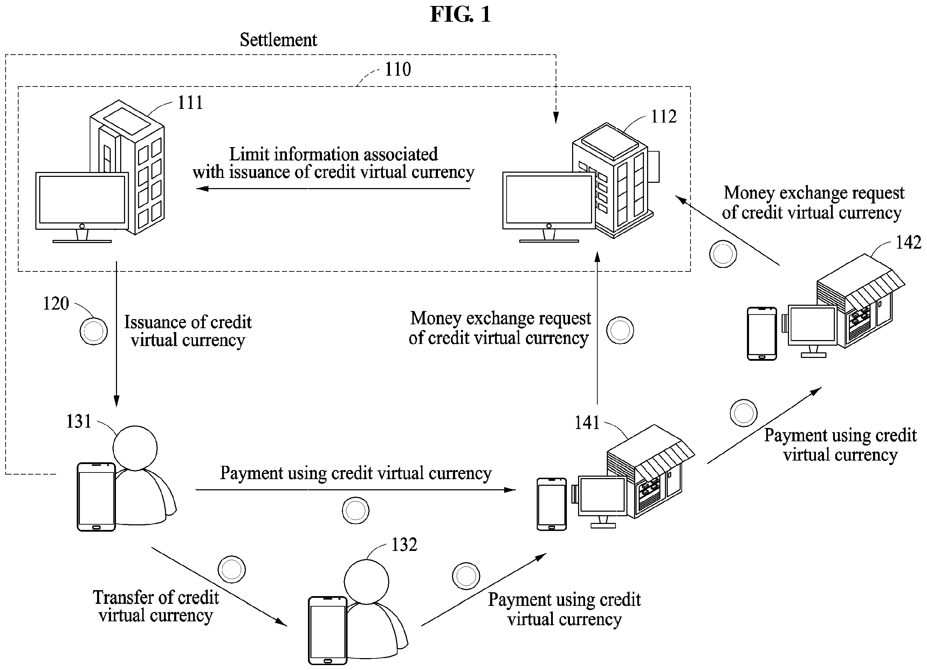

FIG. 1 illustrates an example of a process of proceeding with a payment using a credit virtual currency according to an example embodiment. FIG. 1 illustrates a credit virtual currency transaction management system 110. For example, the credit virtual currency transaction management system 110 may include a virtual currency generation apparatus 111 and a virtual currency management apparatus 112. Although FIG. 1 illustrates that the credit virtual currency transaction management system 110 is configured using two apparatuses, for example, the virtual currency generation apparatus 111 and the virtual currency management apparatus 112 based on individual functions for clarity of description, it is provided as an example only to help the understanding and should not be understood to restrict or limit the scope of other example embodiments. For example, the credit virtual currency transaction management system 110 may be configured as a single processor without a functional separation.

The credit virtual currency transaction management system 110 may issue a credit virtual currency 120 to a user terminal corresponding to each of consumers. In detail, the virtual currency generation apparatus 111 included in the credit virtual currency transaction management system 110 may issue the credit virtual currency 120 to each user terminal. The virtual currency generation apparatus 111 may issue a virtual currency that is generated based on a credit limit of a specific consumer based on a blockchain. In detail, the virtual currency generation apparatus 110 may generate the blockchain including the virtual currency and may update the blockchain based on payment details of the consumer.

According to an example embodiment, a first consumer may receive the credit virtual currency 120 issued from the virtual currency generation apparatus 111 through a first user terminal 131 of the first consumer. For example, the virtual currency generation apparatus 111 may be configured in a form of a card company server that manages real credit cards. Also, the first user terminal 131 may perform a data communication with the virtual currency generation apparatus 111 through an application distributed in advance by the card company server, and may receive the issued credit virtual currency 120.

According to an example embodiment, the first and second consumers may perform a peer-to-peer (P2P) transaction between consumers using the credit virtual currency 120. The first consumer may remit the credit virtual currency 120 to a second user terminal 132 by transferring the credit virtual currency 120 stored in an electronic wallet (e-wallet) within the first user terminal 131.

According to an example embodiment, each of the first consumer and the second consumer may proceed with a credit transaction with a first merchant terminal 141 using the credit virtual currency 120 through a corresponding user terminal, for example, the first user terminal 131 and the second user terminal 132. In detail, the first consumer or the second consumer may proceed with a credit payment with the first merchant terminal 141 using the credit virtual currency 120 stored in the e-wallet within the first user terminal 131 or the second user terminal 132. For example, the first merchant terminal 141 may be provided as a point of sales (POS) terminal or a card payment terminal provided in an actual merchant. As another example, the first merchant terminal 141 may be provided as a merchant server of an Internet shopping site, etc., operated online.

According to an example embodiment, the first merchant terminal 141 may be provided as a terminal, such as a smartphone, a smart pad, a computer, and a portable laptop computer, which executes a virtual currency application distributed from the card company server. In detail, the first merchant terminal 141 may execute an app-to-app transaction through the virtual currency application installed in each of the first user terminal 131 of the first consumer and the second user terminal 132 of the second consumer. The first merchant terminal 141 may perform a payment by receiving the credit virtual currency 120 from the virtual currency application installed on the first user terminal 131 and the second user terminal 132.

The first consumer using a credit transaction service may settle a payment cost using the credit virtual currency 120 to the virtual currency management apparatus 112 through the first user terminal 131. A real legal currency, such as won, may be used during the above settlement process. The above payment settlement procedure may be performed at time intervals preset according to a contract between a card company and a consumer independently from a credit transaction using the credit virtual currency 120. That is, the payment settlement procedure may be performed when a predetermined period of time is elapsed after the credit transaction using the credit virtual currency 120 is completed.

Similar to a consumer, each of a first merchant and a second merchant may perform a P2P transaction between merchants using the credit virtual currency 120. For example, the second merchant may represent a business-to-business (B2B) server that supports an e-commercial transaction between companies. Alternatively, the second merchant may represent a payment terminal of a B2B merchant that supports a transaction between companies. The first merchant may remit the credit virtual currency 120 to a second merchant terminal 142 by transferring the credit virtual currency 120 stored in an e-wallet within the first merchant terminal 141.

Each of the first merchant terminal 141 and the second merchant terminal 142 may transmit a money exchange request of the credit virtual currency 120 to the virtual currency management apparatus 112 based on the credit virtual currency 120 stored in the e-wallet.

Herein, the credit virtual currency transaction management system 110 may issue the credit virtual currency 120 based on a credit of a consumer, and may support a credit transaction between the consumer and a merchant, and also may support a credit transaction between consumers and between merchants using the issued credit virtual currency 120. Hereinafter, a process in which a virtual currency generation apparatus generates a plurality of dependent accounts with respect to a single consumer and provides a credit transaction service for sharing a blockchain according to an example embodiment will be further described.

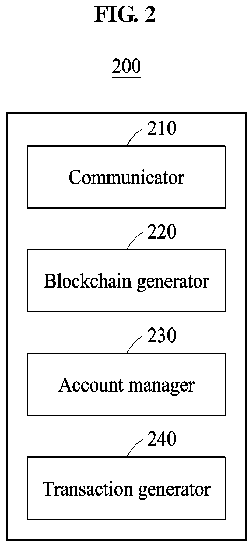

FIG. 2 is a block diagram illustrating a virtual currency generation apparatus according to an example embodiment. Referring to FIG. 2, a virtual currency generation apparatus 200 may include a communicator 210, a blockchain generator 220, an account manager 230, and a transaction generator 240. The communicator 210 may receive a request for generating a first dependent account from a user terminal. The user terminal may represent a terminal, for example, a mobile terminal, corresponding to a primary account of a consumer. Also, an application distributed by a card company managing the virtual currency generation apparatus 200 may be installed on the user terminal, and the consumer may perform an account authentication in advance with respect to the virtual currency generation apparatus 200 through the user terminal.

Herein, a credit virtual currency may be shared through a plurality of multi-signatures. In detail, a single primary account and a plurality of dependent payments may share the virtual currency and may update a blockchain. Here, the primary account may be used when the consumer directly proceeds with a payment and the plurality of dependent payments may be generated through authentication of the primary account and used when a payment is performed through an object terminal associated with a family of the consumer or the consumer.

The blockchain generator 220 may generate a blockchain including a virtual currency that is generated based on a credit limit of the consumer. Also, the blockchain generator 220 may update the blockchain based on payment details. A description related to the blockchain is straight forward content to one of ordinary skill in the art and thus, a further description related thereto is omitted.

The account manager 230 may manage multi-signatures of the plurality of accounts sharing the blockchain. For example, the multi-signature may include at least one of an electronic signature based on a private key, an electronic signature based on a system key, and an electronic signature based on a backup key. In detail, the account manager 230 may manage a multi-signature of at least one of a primary account associated with a user terminal of a consumer and at least one dependent account associated with the consumer. Here, at least one dependent account associated with the consumer may refer to an account that is managed by an associated person, such as a family of a holder of the primary account or a company employee thereof.

Also, at least one dependent account associated with the consumer may refer to an account associated with an object terminal maintained by the holder of the primary account. In detail, the object terminal may refer to a machine terminal having an automated communication function, such as an Internet of things (IoT) terminal, and may be configured as one of electronic devices, such as a smart sensor, a vehicle, a refrigerator, and a washing machine, used by the consumer of the primary account.

The transaction generator 240 may store a transaction condition corresponding to each of the plurality of accounts. For example, the transaction generator 240 may store a first transaction condition corresponding to the primary account, a second transaction condition corresponding to a first dependent account, and a third transaction condition corresponding to a second dependent account. The aforementioned description related to transaction conditions using the primary account and two dependent accounts is provided as an example only to help the understanding and the example embodiments are not limited thereto or restricted thereby. Various modifications, for example, an example embodiment of storing a transaction condition about only a single primary account, an example embodiment of storing a transaction condition about each of a single primary account and ten dependent accounts may be made. Also, the transaction generator 240 may proceed with a payment using a blockchain based on a transaction condition. Hereinafter, a process of managing multi-signature accounts and transaction conditions of multi-accounts according to an example embodiment will be described.

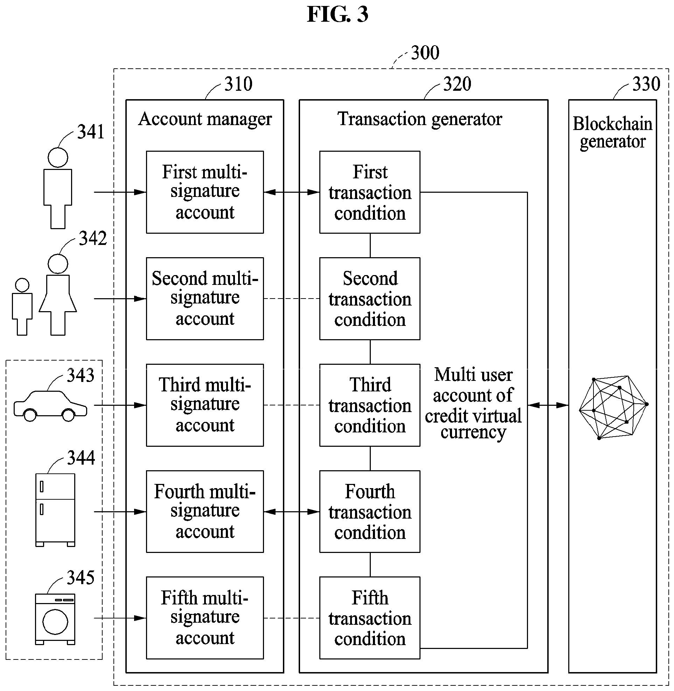

FIG. 3 illustrates an example of an operation process of a virtual currency generation apparatus according to an example embodiment. Referring to FIG. 3, a virtual currency generation apparatus 300 may include an account manager 310, a transaction generator 320, and a blockchain generator 330. A first consumer 341 may share a credit virtual currency with families, acquaintances, and IoT terminals such as electronic devices, through a plurality of accounts associated with the first consumer 341.

In an example of FIG. 3, the first consumer 341 may use four dependent accounts with a primary account used by the first consumer 341. The four dependent accounts may be associated with a family 342 of the first consumer 341, a vehicle 343 of the first consumer 341, a refrigerator 344 of the first consumer 341, and a washing machine 345 of the first consumer 341.

The first consumer 341 may transmit a request for generating a first dependent account to the virtual currency generation apparatus 300 using the user terminal. In detail, the first consumer 341 may transmit an electronic signature using a first private key of the primary account and a transaction condition about the first dependent account to the virtual currency generation apparatus 300 as the request for generating the first dependent account.

Herein, the first dependent account may indicate an account associated with the family 342 of the consumer 341. In this case, the account manager 310 may authenticate the first private key stored in the user terminal. Also, the account manager 310 may determine whether to generate the first dependent account based on a result of the authentication.

In detail, when the first private key is authenticated, the account manager 310 may generate the first dependent account for the first consumer 341. The first dependent account may include a second multi-signature account, and the second multi-signature account may include at least one private key derived using the first private key.

In this case, when the first private key for the first consumer 3410 is authenticated, the transaction generator 320 may store the second transaction condition about the first dependent account. In detail, the second transaction condition may include at least one of an expiry date, a use right, and a payment right of the first dependent account.

Based on the above principle, the virtual currency generation apparatus 300 may generate dependent accounts about the family 342 of the first consumer 341, the vehicle 343 of the first consumer 341, the refrigerator 344 of the first consumer 341, and the washing machine 345 of the first consumer 341, respectively. In detail, the first dependent account associated with the family 342 of the first consumer 341 may be associated with a second multi-signature account and the second transaction condition. A second dependent account associated with the vehicle 343 of the first consumer 341 may be associated with a third multi-signature account and the third transaction condition. A third dependent account associated with the refrigerator 344 of the first consumer 341 may be associated with a fourth multi-signature account and a fourth transaction condition. A fourth dependent account associated with the washing machine 345 of the first consumer 341 may be associated with a fifth multi-signature account and a fifth transaction condition.

The virtual currency generation apparatus 300 may generate a multi-user account operated under the primary account. Also, the virtual currency generation apparatus 300 may provide a user with an effect of supporting a plurality of accounts having different rights by managing transaction conditions corresponding to the respective dependent accounts. For example, the virtual currency generation apparatus 300 may provide a service, such as the third transaction condition that limits the second dependent account associated with the vehicle 343 to be available only within the same type of merchants, such as a car center, a gas station, etc., and the second transaction condition that allows the first dependent account associated with the family 342 that is a minor to have a payment limit of 300,000 won per month, which differs from a payment limit of the primary account.

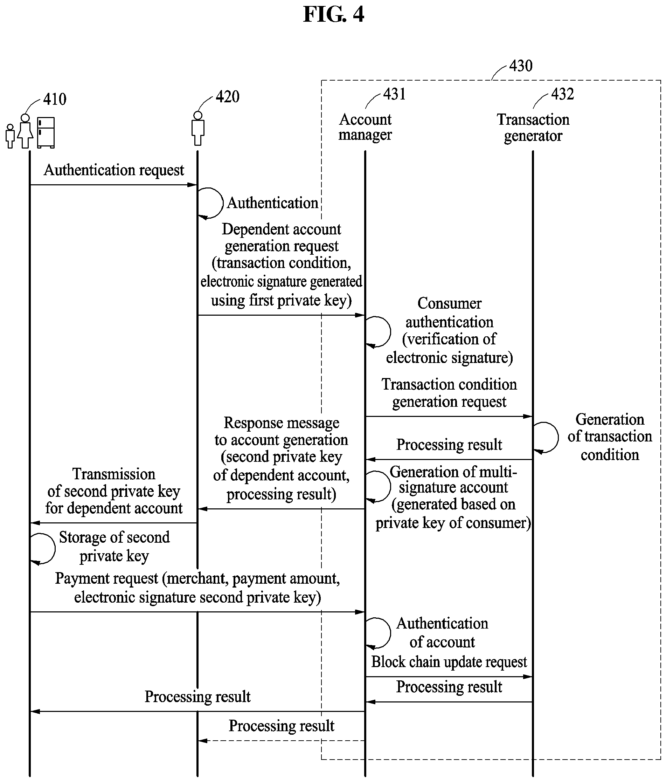

FIG. 4 is a flowchart illustrating a payment process using a credit virtual currency according to an example embodiment. FIG. 4 illustrates a process in which a credit virtual currency is issued through a data communication among a terminal 410 associated with a dependent account of a consumer, a user terminal 420 associated with a primary account of the consumer, and the virtual currency generation apparatus 430, and a payment is performed using the credit virtual currency.

The terminal 410 associated with the dependent account may transmit an authentication request message to the user terminal 420 associated with the primary account to generate a new dependent account sharing a blockchain. The terminal 410 may be provided as a terminal used by a family of the consumer or an IoT terminal configured as an electronic device. An application distributed by a card company issuing a virtual currency may be installed in advance on the terminal 410. An application installation process may be performed using a variety of methods, for example, in response to a selection of a dependent account holder, such as a company employee or a family of the consumer, a terminal manufacturer, a selection of a primary account holder. In this case, the user terminal 420 associated with the primary account may have completed an account authentication and generation with respect to a card company server.

The user terminal 420 associated with the primary account may authenticate the terminal 410 associated with the dependent account in response to a dependent account generation request message. In response to a success in the authentication, the user terminal 420 may transmit, to the virtual currency generation apparatus 430, a dependent account generation request including a transaction condition about the dependent account and an electronic signature generated using a first private key of the primary account.

The account manager 431 of the virtual currency generation apparatus 430 may authenticate the primary account for the user terminal 420 by verifying the received electronic signature. When the primary account is authenticated, the account manager 431 may request the transaction generator 432 to generate a transaction condition about the dependent account. The transaction condition may include an expiry date, a use right, a payment right, etc., of the dependent account to be generated, and the transaction condition is transferred to be stored in a blockchain.

The account manager 431 may receive a result from the transaction generator 432, and may generate a multi-signature account of the dependent account based on a private key that is derived from the first private key of the primary account. Also, the transaction generator 432 may transmit a second private key of the dependent account and a processing result to the user terminal 420 as a response message to the account generation through a communicator. Also, the user terminal 420 may transmit the second private key to the terminal 410 associated with the dependent account. Once the second private key is stored in a memory within the terminal 410, a dependent account generation procedure may be terminated.

A thing terminal or a family of the consumer may transmit a payment request message using a virtual currency to the virtual currency generation apparatus 430 using the dependent account. In this case, in response to the payment request message for the dependent account, the account manager 431 may authenticate the dependent account and may process a transaction. The account manager 431 may request the transaction generator 432 to update the blockchain according to payment details. In response thereto, the transaction generator 432 may transfer a processing result to the account manager 431.

A virtual currency application distributed from a card company server that issues a virtual currency may be installed on each of the terminal 410 and the user terminal 420. Also, the virtual currency application may indicate a data field indicating an identification value of the terminal 410 or the user terminal 420. The virtual currency generation apparatus 430 may verify that an entity associated with a credit transaction is a corporate body, a merchant, or an individual based on the identification value. For example, if a transaction request message using the virtual currency is a message between individuals, the virtual currency generation apparatus 430 may perform remittance processing using the virtual currency. As another example, if the transaction request message using the virtual currency is a message between the corporate body or the merchant and the individual, the virtual currency generation apparatus 43 may perform payment processing using the virtual currency.

The account manager 431 may transmit the processing result to the user terminal 420 or the terminal 410.

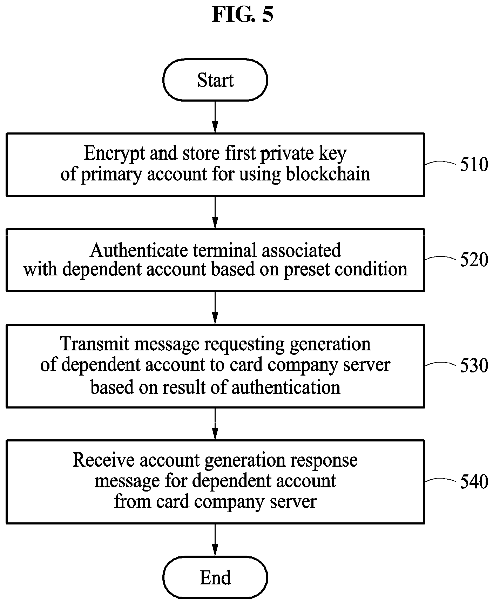

FIG. 5 is a flowchart illustrating a process in which a user terminal associated with a primary account requests generation of a dependent account according to an example embodiment. Referring to FIG. 5, the method of generating, by the user terminal associated with the primary account generates the dependent account may include operation 510 of encrypting and storing a first private key of the primary account for using a blockchain, operation 520 of authenticating a terminal associated with the dependent account based on a preset condition, operation 530 of transmitting a message requesting generation of the dependent account to a card company server based on a result of the authentication, and operation 540 of receiving an account generation response message for the dependent account from the card company server.

In operation 510, the user terminal associated with the primary account may encrypt and store the first private key of the primary account for using the blockchain. For example, a memory within the user terminal may encrypt and store the first private key of the primary account for using the blockchain. The first private key may represent a private key received from the card company server based on a result of authenticating the user terminal. Also, a first system key corresponding to the first private key may be stored in the card company server that issues and manages a virtual currency.

In operation 520, a processor included in the user terminal may authenticate the terminal associated with the dependent account based on the preset condition. For example, the processor may authenticate the terminal by requesting an identification key, such as a residential number, a real credit card number, a real credit card password, a mobile phone number, etc., with respect to the terminal associated with the dependent account and by verifying the received identification key value. A process of authenticating the terminal associated with the dependent account may be variously modified using the known art. For example, the user terminal may authenticate the terminal associated with the dependent account using various example embodiments, such as verifying an expiry date of a real credit card, a card validation code (CVC) number of the real credit card, etc.

In operation 530, the processor included in the user terminal may generate the message requesting generation of a new dependent account based on a result of the authentication performed in operation 520. For example, the message requesting generation of the new dependent account may include an electronic signature using the first private key of the primary account and a transaction condition about the new dependent account. In detail, the processor may determine the transaction condition including at least one of an expiry date, a use right, and a payment right of the dependent account based on a user input. The consumer may define an individual transaction environment of each of a plurality of accounts sharing the same virtual currency by setting the expiry date of the first dependent account to be 1 year through the user terminal corresponding to the primary account, or by setting each transaction condition, such as a second dependent account having a payment right only with respect to a merchant of which a type of business is a restaurant, for example, a fast food restaurant. The transaction condition may be configured in a form of a smart contract that is widely used in the art.

Also, the communicator of the user terminal may transmit the message requesting generation of the new dependent account to the card company server. The blockchain may include a virtual currency that is generated based on a credit limit of the consumer. The communicator may be provided in a form of a communication module including a communication interface. For example, the communication interface may include a wireless Internet interface, such as a wireless local area network (WLAN), a wireless fidelity (WiFi) direct, digital living network alliance (DLNA), wireless Broadband (WiBro), a world Interoperability for microwave access (WiMAX), high speed downlink packet access (HSDPA), etc., and a short range communication interface, such as Bluetooth™, radio frequency identification (RFID), infrared data association (IrDA), ultra wideband (UWB), ZigBee, near field communication (NFC), etc. In addition, the communication interface may represent any type of interfaces, for example, a wired interface, capable of performing communication with an outside.

In operation 540, the user terminal may receive the account generation response message for the dependent account from the card company server. In detail, the processor included in the user terminal may extract a plurality of second private keys for the new dependent account from the account generation response message. The communicator may transmit one of the plurality of second private keys for the new dependent account to the terminal as the private key of the terminal associated with the dependent account. Also, the processor may store one of a plurality of private keys in a memory within the user terminal as a backup key for the new dependent account.

According to an example embodiment, the consumer may generate a plurality of dependent accounts authenticated based on the primary account of the consumer using the user terminal. Also, the consumer may generate a dependent account that shares a credit virtual currency as a payment method based on a credit of the consumer, and may manage an individual transaction environment of each dependent account based on the transaction condition. Accordingly, it is possible to maximize the convenience of managing a multi-user account.

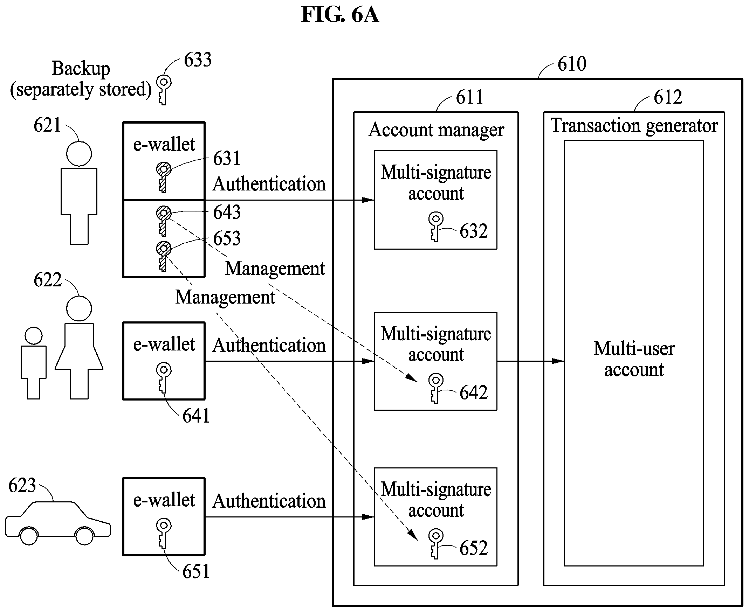

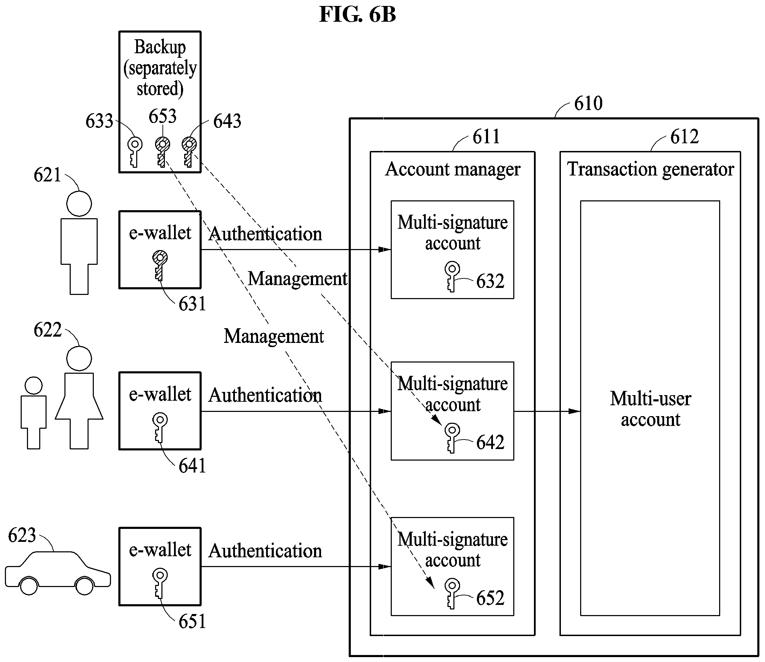

FIGS. 6A and 6B illustrate examples of a process in which a virtual currency generation apparatus generate a multi-signature account according to an example embodiment. FIG. 6A illustrates an operation of a virtual currency generation apparatus 610 that generates a multi-signature account corresponding to a first consumer. Referring to FIG. 6A, the virtual currency generation apparatus 610 may include an account manager 611 and a transaction generator 612. The first consumer 621 may generate a primary account that is directly managed by the first consumer 621, and two dependent accounts that are used by a family 622 of the first consumer and an IoT terminal 623 of the first consumer.

A first private key 631 for the primary account is stored in an e-wallet within a user terminal of the first consumer 621. Once authentication of the primary account is completed, the first private key 631 may represent a key issued from the virtual currency generation apparatus 610. The virtual currency generation apparatus 610 may store a first system key 632 corresponding to the first private key 631 in a multi-signature account within the account manager 611. Also, the virtual currency generation apparatus 610 may issue a first backup key 633 corresponding to the first private key 631 and may transmit the first backup key 633 to the user terminal associated with the primary account. The first consumer 621 may prevent the first private key 631 from being deleted or missed by storing the first backup key 633 in a universal storage device, such as a universal serial bus (USB). If the first private key 631 is deleted or missed, the user terminal of the first consumer 621 may transmit the first backup key 633 to the virtual currency generation apparatus 610 and may continue a management action, for example, may proceed with a payment using a credit virtual currency through authentication with the first system 632, or may delete an account.

Also, in response to receiving a request for generating a new dependent account from the user terminal associated with the primary account, the account manager 611 may verify an electronic signature using the first private key 631. If the electronic signature is authenticated using the first private key 631, the account manager 611 may generate each dependent account. For example, the account manager 611 may generate a plurality of second private keys (641, 642, 643) derived from the first private key 631. In detail, the account manager 611 may store one of the plurality of second private keys as a second system key 642, may transmit one of the plurality of second private keys to the user terminal associated with the primary account as a second backup key 643, and may transmit one of the plurality of second private keys as a private key 641 of a terminal associated with a first dependent account.

Based on the above principle, the account manager 611 may verify the electronic signature using the first private key 631, and may generate a third private key 651, a third system key 652, and a third backup key 653. The third system key 652 may be associated with the IoT terminal 623 of the first consumer and may be stored in the multi-signature account within the account manager 611. Also, the third private key 651 may be stored as a private key for the terminal in an e-wallet within the IoT terminal 623 of the first consumer.

Although a process in which the account manager 611 transmits the private key 641 to the terminal associated with the dependent account is described herein, an example embodiment in which the user terminal associated with the primary account receives two private keys and transmits a single private key to the terminal associated with the dependent account may be provided. In this case, when the first private key 631 is authenticated, the account manager 611 may store a transaction condition about each new dependent account and may transmit at least two of the plurality of second private keys derived from the first private key 631 to the user terminal associated with the primary account.

Here, the user terminal of the consumer associated with the primary account may store the first private key 631 for the primary account and may also store backup keys, for example, the second backup key 643 and the third backup key 653, for the plurality of dependent accounts. The backup keys, for example, the second backup key 643 and the third backup key 653, may be derived from the first private key 631. Accordingly, the consumer may stably perform an account management, for example, a transaction suspension, a payment cancellation, a private key discard, with respect to each of the individual dependent accounts based on the backup keys, for example, the second backup key 643 and the third backup key 653, for the dependent accounts. Also, the card company server may verify the backup keys, for example, the second backup key 643 and the third backup key 653, for the plurality of dependent accounts generated based on the first private key 631 and thus, may safely and easily verify that the consumer is a user of the primary account having a capability of managing a corresponding dependent account.

According to an example embodiment, the processor of the user terminal associated with the primary account may generate one of the account deletion message and the payment cancellation message for the new dependent account in response to a user input. For example, when the consumer desires to delete the first dependent account associated with the family 622 of the first consumer, each of the account deletion message and the payment cancellation message may include an electronic signature based on the second backup key 643 stored in the memory of the user terminal. Also, the second backup key 643 may represent a key that is derived from the second private key 641 stored in the terminal associated with the first dependent account. The communicator of the user terminal may transmit one of the account deletion message and the transaction cancellation message to the account manager 611. The account manager 611 may verify the electronic signature using the second system key 642 stored for the first dependent account, may delete the first dependent account or may cancel a payment associated with the first dependent account based on a result of the verification.

According to an example embodiment, the account manager 611 may generate a single third private key that is derived from the first private key 631, and may transmit the generated third private key to the user terminal associated with the primary account as the third backup key 653. Also, the account manager 610 may generate a plurality of third private keys based on the third backup key 653, may store one of the plurality of third private keys as the third system key 652, and may transmit one of the plurality of third private keys as the private key 651 of the terminal associated with a second dependent account.

FIG. 6B illustrates an example embodiment in which backup keys, for example, the second system key 642 and the second backup key 643, for a plurality of dependent accounts are separately managed to be independent from the first private key 631 for the primary account. The description made above with FIG. 6A may be applicable to other components and thus, a repeated description is omitted here. The first consumer 621 managing the primary account may store only the first private key 631 for the primary account in the e-wallet within the user terminal of the first consumer 621. In this case, the first consumer 621 may store the backup keys, for example, the second system key 642 and the second backup key 643, for the plurality of dependent accounts in a storage medium, such as a USB or a storage token, and may cope with an emergency situation. For example, when the first consumer 621 lost the user terminal, the first private key 631 may be lost. However, in this case, the first consumer 621 may continue a management, such as an account deletion, a payment cancellation, etc., with respect to a dependent account using backup keys, for example, the separately maintained second system key 642 and second backup key 643, until a private key of the primary account is reissued.

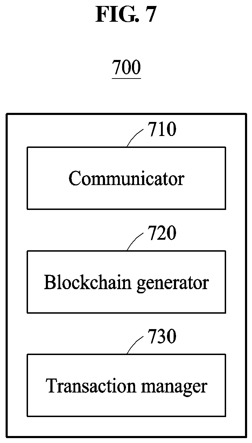

FIG. 7 is a block diagram illustrating a virtual currency management apparatus according to an example embodiment. Referring to FIG. 7, a virtual currency management apparatus 700 may include a communicator 710, a blockchain generator 720, and a transaction manager 730. The communicator 710 may receive a payment request message using a blockchain from a terminal associated with a first account among a plurality of accounts sharing the blockchain. Although not illustrated in FIG. 7, the virtual currency management apparatus 700 may include a processor and each of the blockchain generator 720 and the transaction manager 730 may be configured at least temporarily by the processor.

The blockchain generator 720 may generate the blockchain including a virtual currency that is generated based on a credit limit of a consumer, and may update the blockchain based on payment details.

The transaction manager 730 may verify a transaction condition corresponding to the first account and the payment request message and may manage whether to approve a transaction. The transaction manager 730 may determine whether to approve the transaction by comparing the transaction condition with at least one of merchant information, a payment amount, and an electronic signature included in the payment request message. Even for multiple accounts of the same consumer, a different transaction condition may be set for each of the primary account and dependent accounts. In detail, the transaction condition may include a use right of the first account, a payment right of the first account, and a backup key of the first account.

For example, when transaction type information included in the payment request message corresponds to an installation transaction, the transaction manager 730 may substrate an entire installation amount from a payment limit included in the transaction condition. Also, the transaction manager 730 may verify whether an installation charge corresponding to the first account is deposited after a predetermined period of time is elapsed, and may restore a portion of the payment limit included in the transaction condition based on a result of the deposit.

For example, when the first dependent account has an entire payment limit of 1,200,000 won and in this instance, a payment of 1,000,000 won by a 5-month installation is made using the first dependent account, the transaction manager 730 may calculate a payment limit of the first dependent account as 200,000 won. If 200,000 won corresponding to an installation amount is deposited after 1 month, the transaction manager 730 may calculate the payment limit of the first dependent account from the previous amount of 200,000 won to be 400,000 won by restoring the payment account by an installation amount of 200,000 won. In the same manner, the virtual currency management apparatus 700 may support an installation transaction for each dependent account and may manage the payment limit to correspond to the installation transaction.

According to an example embodiment, when transaction type information included in the payment request message corresponds to an installation transaction, the transaction manager 730 may verify whether the first account is an installation allowing account based on the transaction condition. For example, a transaction condition may be set by the consumer of the primary account not to allow an installation transaction with respect to a specific dependent account. In this case, the transaction manager 730 may manage each dependent account by verifying in advance whether a corresponding dependent account is an installation allowing account in response to a payment request message.

The example embodiments described herein may be implemented using hardware components, software components, and/or a combination thereof. For example, the apparatus, the method, the processing device, and the component described herein may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will be appreciated that a processing device may include multiple processing elements and/or multiple types of processing elements. For example, a processing device may include multiple processors or a processor and a controller. In addition, different processing configurations are possible, such as parallel processors.

The software may include a computer program, a piece of code, an instruction, or some combination thereof, to independently or collectively instruct and/or configure the processing device to operate as desired, thereby transforming the processing device into a special purpose processor. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM and DVDs; magnetooptical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The above-described devices may be configured to act as one or more software modules in order to perform the operations of the above-described example embodiments, or vice versa.
A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents.

## Claims

1. A virtual currency generation apparatus comprising:
a processor,
wherein the processor comprises:
a blockchain generator configured to generate a blockchain including a virtual currency that is generated based on a credit limit of a consumer and to update the blockchain based on payment details;
an account manager configured to manage multi-signatures of a plurality of accounts sharing the blockchain; and
a transaction generator configured to store a transaction condition corresponding to each of the plurality of accounts and to proceed with a payment using the virtual currency based on the transaction condition.

2. The virtual currency generation apparatus of claim 1, wherein the account manager is configured to manage a multi-signature of each of a primary account associated with a user terminal of the consumer and at least one of dependent account associated with the consumer.

3. The virtual currency generation apparatus of claim 2, further comprising:
a communicator configured to receive a request for generating a first dependent account from the user terminal,
wherein the account manager is configured to authenticate a first private key stored in the user terminal and to determine whether to generate the first dependent account based on a result of the authentication.

4. The virtual currency generation apparatus of claim 3, wherein the account manager is configured to generate the first dependent account in response to the first private key being authenticated and to generate a multi-signature of the first dependent account using the first private key.

5. The virtual currency generation apparatus of claim 4, wherein the account manager is configured to generate a plurality of second private keys derived from the first private key, to store one of the plurality of second private keys as a system key, to transmit one of the plurality of second private keys to the user terminal corresponding to the primary account, and to transmit one of the plurality of second private keys to a terminal associated with the first dependent account.

6. The virtual currency generation apparatus of claim 3, wherein the communicator is configured to receive an electronic signature using the first private key of the primary account and a transaction condition about the first dependent account as the request for generating the first dependent account, and
the transaction generator is configured to store the transaction condition about the first dependent account in response to the first private key being authenticated, and the transaction condition includes at least one of an expiry date, a use right, and a payment right of the first dependent account.

7. The virtual currency generation apparatus of claim 2, wherein the user terminal of the consumer is configured to store a first private key for the primary account and to store backup keys for each of the at least one dependent account, and
the backup keys are derived from the first private key.

8. A user terminal comprising:
a communicator configured to receive an authentication request for sharing a blockchain from a terminal;
a memory configured to encrypt and store a first private key of a primary account for using the blockchain; and
a processor configured to authenticate the terminal based on a preset condition and to generate a message requesting generation of a new dependent account based on a result of the authentication,
wherein the message requesting the generation of the new dependent account includes an electronic signature using the first private key of the primary account and a transaction condition about the new dependent account, and
the blockchain includes a virtual currency that is generated based on a credit limit of a consumer.

9. The user terminal of claim 8, wherein the processor is configured to determine the transaction condition including at least one of an expiry date, a use right, and a payment right of the dependent account in response to a user input.

10. The user terminal of claim 8, wherein the communicator is configured to transmit the message requesting the generation of the new dependent account to a card company server managing the blockchain, and
the card company server is configured to store the transaction condition about the new dependent account in response to the first private key being authenticated and to transmit at least two of a plurality of second private keys derived from the first private key to the user terminal.

11. The user terminal of claim 10, wherein the communicator is configured to receive an account generation response message for the new dependent account from the card company server, and
the processor is configured to extract a plurality of second private keys for the new dependent account from the account generation response message.

12. The user terminal of claim 8, wherein the memory includes a virtual currency application distributed from a card company server, and
the processor is configured to process a credit payment using a virtual currency associated with the blockchain with a consumer terminal that is connected using the virtual currency application through the communicator.

13. The user terminal of claim 11, wherein the communicator is configured to transmit one of a plurality of second private keys for the new dependent account to the terminal as a private key of the terminal, and
the processor is configured to store one of the plurality of second private keys in the memory as a backup key for the new dependent account.

14. The user terminal of claim 13, wherein the processor is configured to generate one of an account deletion message and a payment cancellation message for the new dependent account in response to a user input,
each of the account deletion message and the payment cancellation message includes an electronic signature based on the second private key stored in the memory,
the communicator is configured to transmit one of the account deletion message and the payment cancellation message to the card company server, and
the card company server is configured to verify the electronic signature using a system key stored for the dependent account and to delete the dependent account or cancel a payment associated with the dependent account based on a result of the verification.

15. A non-transitory computer-readable recording medium storing a program to generate a dependent account, wherein the program comprises:
an instruction set configured to encrypt and store a first private key of a primary account for using a blockchain;
an instruction set configured to authenticate a terminal associated with the dependent account based on a preset condition;
an instruction set configured to transmit a message requesting generation of the dependent account to a card company server managing the blockchain based on a result of the authentication; and
an instruction set configured to receive an account generation response message for the dependent account from the card company server.

16. The non-transitory computer-readable recording medium of claim 15, wherein the program comprises:
an instruction set configured to extract a plurality of second private keys for the dependent account from the account generation response message; and
an instruction set configured to transmit one of the plurality of second private keys as a private key of a terminal associated with the dependent account.

17. A virtual currency management apparatus comprising:
a communicator configured to receive a payment request message using a blockchain from a terminal associated with a first account among a plurality of accounts sharing the blockchain; and
a processor,
wherein the processor comprises:
a blockchain generator configured to generate the blockchain including a virtual currency that is generated based on a credit limit of a consumer and to update the blockchain based on payment details; and
a transaction manager configured to verify a transaction condition corresponding to the first account and the payment request message and to manage whether to approve a transaction.

18. The virtual currency management apparatus of claim 17, wherein the transaction manager is configured to determine whether to approve the transaction by comparing the transaction condition and at least one of merchant information, a payment amount, and an electronic signature included in the payment request message, and
the transaction condition includes a use right of the first account, a payment right of the first account, and a backup key of the first account.

19. The virtual currency management apparatus of claim 18, wherein, when transaction type information included in the payment request message corresponds to an installation transaction, the transaction manager is configured to substrate an entire installation amount from a payment limit included in the transaction condition.

20. The virtual currency management apparatus of claim 19, wherein the transaction manager is configured to verify whether an installation charge corresponding to the first account is deposited after a predetermined period of time is elapsed, and to restore a portion of the payment limit included in the transaction condition based on a result of the deposit.

21. The virtual currency management apparatus of claim 18, wherein, when transaction type information included in the payment request message corresponds to an installation transaction, the transaction manager is configured to verify whether the first account is an installation allowing account based on the transaction condition.

22. The virtual currency management apparatus of claim 17, wherein the transaction manager is configured to verify an identification value associated with the first account, and to perform remittance processing or payment processing corresponding to the payment request message based on information indicated by the identification value.
